Europäisches Patentamt

European Patent Office

Office européen des brevets

(11) Numéro de publication : **0 334 767 B1**

## (12) FASCICULE DE BREVET EUROPEEN

(45) Date de publication du fascicule du brevet :
**14.10.92 Bulletin 92/42**

(51) Int. Cl.⁵ : **B21D 28/24, B23D 23/02**

(21) Numéro de dépôt : **89400851.5**

(22) Date de dépôt : **24.03.89**

(54) **Outil de poinçonnage à matrice flottante.**

(30) Priorité : **25.03.88 FR 8803973**

(43) Date de publication de la demande :
**27.09.89 Bulletin 89/39**

(45) Mention de la délivrance du brevet :
**14.10.92 Bulletin 92/42**

(84) Etats contractants désignés :
**AT BE CH DE ES GB GR IT LI LU NL SE**

(56) Documents cités :
**DE-A- 2 453 567**
**FR-A- 2 299 934**
**FR-A- 2 403 840**
**US-A- 3 938 413**
**US-A- 4 468 995**

(73) Titulaire : **TECHNAL S.A.**
**270, rue Léon Joulin**
**F-31037 Toulouse Cedex (FR)**

(72) Inventeur : **Clauzet, Robert**
**5 avenue du Parc**
**F-31700 Blagnac (FR)**
Inventeur : **Fortier, Jean-Hugues**
**28 rue des Marchands**
**F-31000 Toulouse (FR)**

(74) Mandataire : **Grosset-Fournier, Chantal**
**Catherine et al**
**SC Ernest Gutmann/Yves Plasseraud 67**
**boulevard Haussmann**
**F-75008 Paris (FR)**

## Description

La présente invention est relative à un outil de poinçonnage permettant de réaliser, grâce à une matrice flottante, le percement de profilés entièrement métallique ou plus généralement incorporant d'autres matériaux et dont les cotes ne sont parfaitement rigoureuses d'un profilé à l'autre, l'outil étant agencé pour assurer le positionnement précis du ou des poinçons vis-à-vis de la matrice ou réciproquement, en calant le profilé de manière automatique par rapport à un élément de référence fixe, lié à l'outil.

On sait qu'en menuiserie métallique, en particulier en menuiserie d'aluminium utilisant des profilés de grande longueur pour constituer des parties fixes ou mobiles, s'encastrant ou coulissant les uns par rapport aux autres, sont mis en oeuvre de plus en plus fréquemment des dispositions qui assurent une rupture de pont thermique, afin de permettre une meilleure isolation entre les côtés internes et externes de panneaux de construction utilisant de tels profilés.

Ces dispositions peuvent notamment consister dans l'usage de barrettes en matière plastique, par exemple en polyamides chargés en fibres de verre, qui sont assemblées et serties avec ou contre des parties métalliques du profilé. Or ces barrettes d'une part, le montage réalisé avec les parties de profilé qu'elles assemblent d'autre part, conduisent à des ensembles qui ne présentent pas des dimensions toujours identiques mais comportent au contraire des variations notables, en particulier dans leur largeur.

Il en résulte que l'emploi d'un outillage classique, recevant un profilé de ce genre entre une matrice et un porte poinçons pour effectuer des perçages appropriés dans les voiles ou autres parties du profilé, risque sans précaution particulière, d'aboutir au résultat que les emplacements des trous obtenus avec les poinçons changent d'un profilé à l'autre, ce qui est particulièrement gênant, voire rédhibitoire pour réaliser ensuite des assemblages de ces profilés avec d'autres éléments de construction.

Tout au contraire, le bon usage des profilés en question exige une réalisation parfaitement répétitive et régulière des trous de perçage pour éviter des ajustements ou rectifications ultérieures qui nuisent au renderendement et grèvent le coût des constructions réalisées.

La présente invention a donc pour objet un outil de poinçonnage à matrice flottante qui évite ces inconvévénients, en permettant de rattraper immédiatement et automatiquement le jeu éventuel pouvant exister du fait des variations de cotes de deux profilés successifs, tout en évitant les inconvénients des systèmes classiques où l'emploi d'une matrice de ce genre génère, par rapport au porte-poinçons, un manque de rigidité préjudiciable.

L'invention s'applique plus particulièrement quoique de façon non exclusive au poinçonnage d'un profilé métallique comportant un corps tubulaire central muni de deux toiles parallèles, au moins en partie formées de barrettes en matière plastique, serties ou autrement assemblées avec le profilé, et des côtés latéraux dont l'un délimite extérieurement avec une paroi du corps central parallèle à ce côté une tubulure latérale adjacente au corps central.

Selon l'invention, l'outil considéré, pour un profilé du genre ci-dessus, comportant une matrice propre à s'engager dans l'axe du corps tubulaire central, un bâti fixe supportant la matrice, celle-ci étant entourée de deux pièces allongées de positionnement parallèles entre elles et solidaires du bâti, sur l'une desquelles s'engage la tubulure latérale du profilé, respectivement à droite ou à gauche selon la position du profilé, et un porte-poinçons mobile par rapport à la matrice, au moins un poinçon, supporté par le porte-poinçons coulissant dans un alésage de guidage prévu dans la matrice pour percer ou gruger le corps central et s'il y a lieu la tubulure latérale, se caractérise en ce que la matrice et le porte-poinçons sont montés flottants par rapport au bâti et en ce que la matrice comporte à cet effet une rainure transversale dans laquelle coulisse relativement un tenon de même profil, ce tenon étant solidaire d'un axe perpendiculaire à la matrice et engagé à libre rotation dans un alésage de guidage de même diamètre, prévu dans le bâti.

L'engagement du profilé à la fois par sa tubulure latérale dans la pièce de positionnement fixe portée par le bâti d'une part, du corps tubulaire central dans la matrice montée flottante d'autre part, permet ainsi à cette dernière de venir se positionner automatiquement par rapport à la pièce fixe prise pour référence, en déterminant dès lors l'alignement du profilé vis-à-vis du bâti et au porte-poinçons mobile par rapport à ce bâti.

Avantageusement, le porte-poinçons comporte, de façon en elle-même connue un tiroir coulissant à l'intérieur d'un guide fixe, solidaire de la partie supérieure qui est constituée par une pièce d'actionnement, ce tiroir étant adapté à fermer ou ouvrir, selon sa position dans le guide, des évidements tels que, selon le cas, le mouvement du porte-poinçons soit commandé avec ou sans celui d'emporte pièces complémentaires, adaptés à percer ou découper la tubulure latérale, simultanément avec le perçage du corps tubulaire central.

D'autres caractéristiques d'un outil de poinçonnage établi conformément à l'invention apparaîtront encore à travers la description qui suit d'un exemple de réalisation, donné à titre indicatif et non limitatif en référence aux dessins annexés sur lesquels :

    – la figure 1 est une vue en coupe par un plan horizontal, de l'outil considéré, et illustre également la forme du profilé à poinçonner au moyen dudit outil.

    – la figure 2 est une vue en coupe par un plan vertical de l'outil et du profilé, en position engagée dans celui-ci.

– la figure 3 est une vue en perspective éclatée, illustrant les diverses pièces de l'outil, en particulier le bâti de support, la matrice flottante, les pièces de positionnement du profilé et porte-poinçons et le guide de coulissement du tiroir.

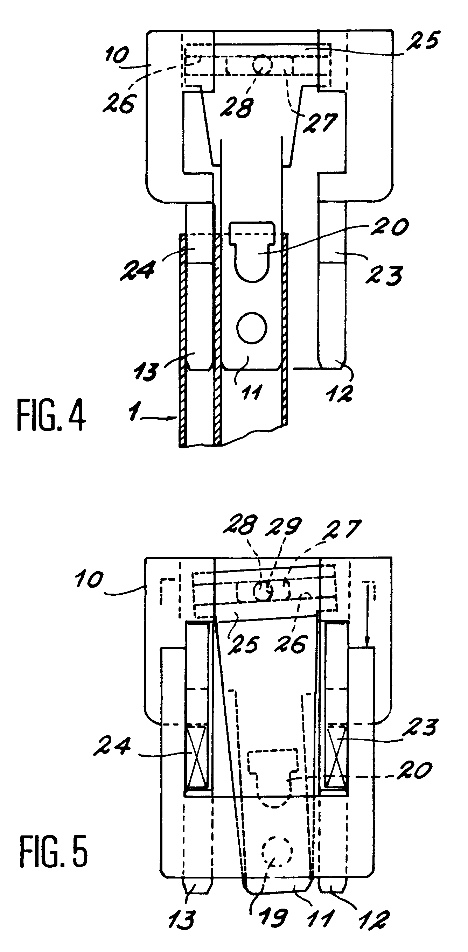

– les figures 4 et 5 sont des vues de détail à plus faible échelle de l'outil selon un mode de réalisation de l'invention, permettant de préciser la mise en oeuvre de la matrice.

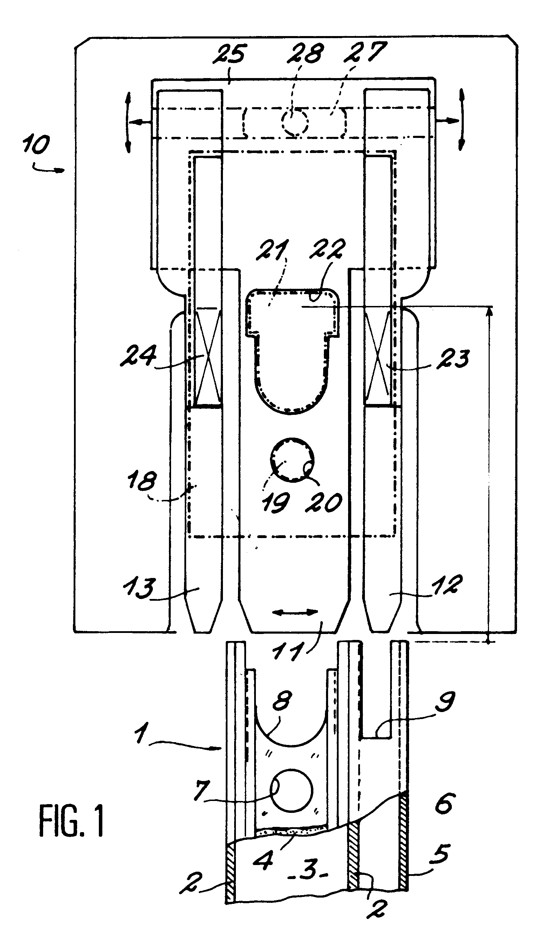

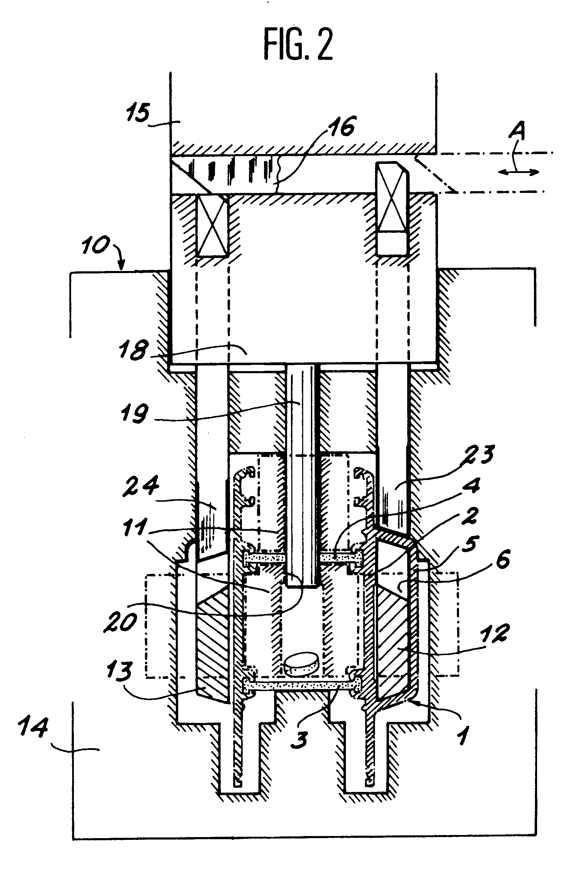

Sur les figures 1 et 2 notamment, a été représentée l'extrêmité d'un profilé 1, adapté à être travaillé par l'outil selon un mode de réalisation de l'invention. Ce profilé se compose d'un corps tubulaire central 2, dont la section présente une forme carrée ou rectangulaire, délimitant entre ses voiles deux à deux parallèles, une région interne 3. Dans l'un au moins des voiles du corps central 2 est par ailleurs montée au moins une barrette 4, en matière plastique ou autre, propre à assurer de façon en elle-même connue une rupture thermique appropriée de part et d'autre du corps central 2, entre ses faces opposées. Le profilé 1 comporte également une extension latérale, constituée par une paroi 5 parallèle à l'un des côtés du corps central 2 et délimitant avec celui-ci une tubulure adjacente 6.

Pour les besoins de son utilisation, notamment de son montage en liaison avec d'autres profilés ou éléments de structure, le profilé 1 doit subir des poinçonnages appropriés et également un enlèvement de matière dans l'extrêmité du corps central 2, le cas échéant en bout de la tubulure latérale 6. Dans l'exemple de réalisation représenté, on a ainsi prévu de ménager dans le corps 2, plus particulièrement encore au niveau de la barrette isolante 4, un perçage circulaire 7 et vers la partie terminale du profilé un évidement 8 de forme demi-circulaire. Dans la tubulure latérale 6, on désire de la même manière réaliser un enlèvement de matière, afin de former une échancrure 9, ouverte vers l'extérieur, et dont la forme est ici sensiblement rectangulaire. Bien entendu, il va de soi que les perçages et enlèvements de matière ou échancrures ainsi prévus dans le profilé 1 pourraient présenter toute autre forme, selon les nécessités d'usage du profilé au prix seulement d'une simple modification de la forme correspondante des poinçons ou emporte-pièces portés par l'outil.

Comme on le voit également sur les figures 1 et 2, l'outil considéré, désigné dans son ensemble sous la référence 10, comporte à sa partie inférieure une matrice 11, montée flottante de la manière qui sera décrite ci-après, cette matrice 11 étant entourée de deux pièces de positionnement fixes 12 et 13 parallèles entre elles la matrice 11 d'une part, les pièces 12 et 13 d'autre part, présentant un profil tel que le profilé 1 puisse librement s'engager sur ces éléments, les corps tubulaire central 2 autour de la matrice flottante 11 et la tubulure latérale 6 autour de l'une des deux pièces 12 ou 13, selon que la présentation du profilé par rapport à l'outil s'effectue avec cette tubulure à droite ou à gauche du corps central 2.

L'outil 10 comporte également un bâti rigide 4 et à sa partie supérieure une pièce d'actionnement 15, mobile verticalement par rapport au bâti et à l'intérieur de celui-ci, de façon à imprimer à des poinçons ou emporte-pièces appropriés, un mouvement apte à réaliser dans le profilé 1 les perçages et enlèvements de matière souhaitée.

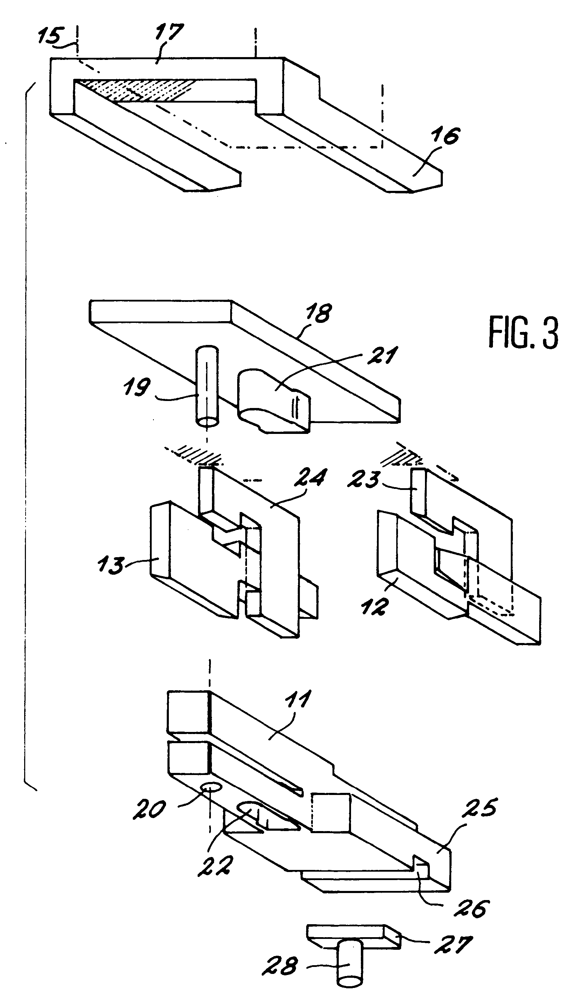

La figure 3 illustre de façon plus détaillée la structure des différentes parties de l'outil 10, de sa partie supérieure vers sa partie inférieure. Il comporte ainsi sous la pièce d'actionnement 15, un tiroir coulissant 16, monté à l'intérieur d'un guide non représenté porté par le bâti de manière à assurer le déplacement de ce tiroir parallèlement à lui-même selon le sens de la double flèche A (figure 3). Ce tiroir 16 comporte une traverse 17, qui s'étend seulement sur une partie de sa longueur afin que, selon la position relative du tiroir par rapport au bâti, il permette d'entraîner ou au contraire de laisser libre de s'échapper à l'intérieur du tiroir deux emporte-pièces 23 et 24, prévus pour effectuer l'échancrure 9 de la tubulure latérale 6.

Sous le tiroir 16 est montée une plaque 18, parallèle et comportant dans sa face inférieure un poinçon 19, de forme cylindrique propre à coulisser dans un alésage de guidage 20 prévu dans la matrice flottante 11, ce poinçon 19 étant destiné à réaliser dans le profilé 1, le perçage circulaire 7. De la même manière, le plateau porte-poinçons 18 supporte, à côté du poinçon 19, une pièce de forme 21, également guidée dans un passage de même profil 22 prévu dans la matrice 11 et destiné à réaliser l'échancrure 8 du profilé 1.

Sur chaque côté du plateau 18, sont montés en deux emporte-pièces, respectivement 23 et 24, adaptés à coulisser dans des rainures aménagées respectivement dans les pièces de positionnement fixes 12 et 13. A noter que la mise en oeuvre de ces emporte-pièces 23 et 24 n'est réalisée que pour la position du tiroir 16 où celui-ci se présente en regard de ceux-ci. En revanche, pour une position reculée du tiroir, ces mêmes emporte-pièces sont libres de se déplacer vers le haut du bâti 14, indépendamment du mouvement de la plaque porte-poinçons 18. Ainsi le perçage 7 et l'échancrure 8 peuvent être réalisés dans le profilé 1 à chaque mouvement de la pièce 15, alors que l'échancrure 9 peut ou non être effectuée simultanément, ceci selon la position du tiroir 16 en fonction des nécessités de l'utilisation du profilé.

La matrice 11 est rendue flottante vis-à-vis du bâti 14, en disposant sur un prolongement 25 de celle-ci, disposé dans l'axe, une rainure 26 ouverte vers le bas et dans laquelle s'engage un tenon 27 de même profil. Ce tenon 27 comporte à son tour, dans sa face inférieure, un axe cylindrique 28, propre à s'engager dans un alésage ouvert 29, prévu dans la partie correspondante du bâti 14.

Grâce à ces dispositions, la matrice 11 peut ainsi non seulement subir un déplacement transversal, le tenon 27 coulissant dans la rainure 26, mais également avec le tenon, une rotation relative par rapport au bâti, en tournant avec l'axe 28. Il en résulte une possibilité immédiate d'alignement du profilé 1 dont le corps tubulaire central 2 est engagé et rendu solidaire de la matrice 11 par rapport aux pièces de positionnement fixes 12 ou 13, dont l'une quelconque a reçu la tubulure 6. Dans tous les cas, le profilé 1 est ainsi mis en place et ajusté par rapport à une référence extérieure fixe, constituée par la pièce 12 ou 13 utilisée, et non pas par rapport à la matrice flottante elle-même qui au contraire s'aligne automatiquement sur la pièce 12 ou 13 mise en oeuvre. Il en résulte que les perçages et échancrures 7 et 8, voire 9 réalisés dans le corps tubulaire central 2 aussi bien que dans la tubulure latérale 6 sont toujours parfaitement positionnés par rapport à cette dernière, ceci automatiquement et sans aucun réglage. L'utilisation de barrettes isolantes 4 dans la structure du profilé 1 conduisant nécessairement à une certaine variation des cotes transversales de ce profilé, au moins dans sa partie tubulaire centrale 2, l'inconvénient qui résulterait de perçages effectués à des emplacements variables est ainsi totalement évité.

L'outil très simple à réaliser est d'un emploi facile, le réglage de position du profilé s'effectuant directement en évitant tous les phénomènes d'arc-boutement qui pourraient être autrement mis en jeu, tout en autorisant des découpes satisfaisantes et parfaitement répétitives.

## Revendications

1°) Outil de poinçonnage pour profilé métallique (1) comportant un corps tubulaire central (2), muni de deux toiles parallèles, au moins en parties formées de barrettes (4) en matière plastique serties ou autrement assemblées avec le profilé (1) et des côtés latéraux dont l'un au moins délimite extérieurement avec une paroi du corps central, parallèle à ce côté, une tubulure latérale (6) adjacente au corps central (2), ledit outil comportant une matrice (11), propre à s'engager dans l'axe du corps tubulaire central, un bâti fixe (10) supportant la matrice (11), celle-ci étant entourée de et deux pièces allongées de positionnement (12-13), parallèles entre elles et solidaires du bâti, sur l'une desquelles peut s'engager la tubulure latérale (6) du profilé (1), respectivement à droite ou à gauche selon la position du profilé, et un porte-poinçons (18), mobile par rapport à la matrice (11), au moins un poinçon (19), supporté par le porte-poinçons (18) coulissant dans un alésage de guidage (20)

prévu dans la matrice (11), pour percer ou gruger le corps central (2) et s'il y a lieu la tubulure latérale (6), caractérisé en ce que la matrice (11) et le porte-poinçons (18) sont montés flottants par rapport au bâti (10) et en ce que la matrice (11) comporte à cet effet une rainure transversale (26), dans laquelle coulisse relativement un tenon (27) de même profil, ce tenon étant solidaire d'un axe (28) perpendiculaire à la matrice (11) et engagé à libre rotation dans un alésage de guidage de même diamètre, prévu dans le bâti (10).

2°) Outil de poinçonnage selon la revendication 1, caractérisé en ce que le porte-poinçons (18) est constitué par un plateau, commandé en déplacement vis-à-vis de la matrice par une pièce d'actionnement (15), et supportant vers la matrice au moins un poinçon (19) et éventuellement un emporte pièce (21), coulissant dans la matrice dans des guides (20-22) de même profil.

3°) Outil de poiçonnage selon les revendications 1 ou 2, caractérisé en ce que le porte-poinçons (18) dans sa partie supérieure, qui est constituée par une pièce d'actionnement (15) supporte un tiroir coulissant (16) à l'intérieur d'un guide fixe, solidaire de la pièce d'actionnement (15), ce tiroir étant adapté à fermer ou ouvrir, selon sa position dans le guide, des évidements tels que, selon le cas, le mouvement du porte-poinçons soit commandé avec ou sans celui d'emporte pièces complémentiares (23-24) adaptés à percer ou découper la tubulure latérale (6), simultanément avec le perçage du corps tubulaire central (2).

## Patentansprüche

1. Stanzwerkzeug für ein Metallprofil (1), das einen rohrförmigen Zentralkörper (2), der mit zwei parallelen Blechen versehen ist, die mindestens teilweise aus Stegen (4) aus Kunststoff gebildet und mit dem Profil (1) durch Falzen oder in sonstiger Weise verbunden sind, sowie Seiten aufweist, von denen mindestens eine außen mit einer Wand des zentralen Körpers parallel zu dieser Seite ein Seitenrohr (6) benachbart zum Zentralkörper (2) begrenzt, wobei das Werkzeug eine zum Eingriff in die Achse des zentralen Rohrkörpers geeignete Matrize (11), ein die von zwei langgestreckten Positionierteilen (12-13) umgebene Matrize (11) halterndes festes Gestell (10), wobei die Positionierteile parallel zueinander und mit dem Gestell fest verbunden sind und auf eines von ihnen sich das Seitenrohr (6) des Profils (1) aufstecken kann, rechts bzw. links je nach Position des Profils, sowie einen gegenüber der Matrize (11) bewegbaren Stanzträger (18) aufweist, wobei mindestens ein von dem Stanzträger (18) getragener Stanzdorn (19) in einer in der Matrize (11) vorgesehenen Führungsausnehmung (20) gleitet, um den zentralen Körper (2) und ggf. das Seitenrohr (6) zu durchstoßen oder -stanzen, dadurch gekennzeichnet, daß die Matrize (11) und der Stanzträger (18) schwimmend gegenüber dem Gestell (10) montiert sind und daß die Matrize (11) zu diesem Zweck eine Quernut (26) aufweist, in der ein Positionierstein (27) des gleichen Profils relativ gleitet, der mit einer Achse (28) verbunden ist, die senkrecht zur Matrize (11) verläuft und frei drehbar in eine Führungsausnehmung des gleichen Durchmessers eingreift, die in dem Gestell (10) vorgesehen ist.

2. Stanzwerkzeug nach Anspruch 1, dadurch gekennzeichnet, daß der Stanzträger (18) von einer Platte gebildet ist, die von einem Betätigungsstück (15) in ihrer Verlagerung gegenüber der Matrize gesteuert wird und in Richtung auf die Matrize mindestens einen Stanzdorn (19) und ggf. einen Lochstanzer (21) trägt, der in der Matrize in Führungen (20-22) mit gleichem Profil gleitet.

3. Stanzwerkzeug nach den Ansprüchen 1 oder 2, dadurch gekennzeichnet, daß der Stanzträger (18) in seinem oberen Teil, das von einem Betätigungsstück (15) gebildet ist, einen Gleitschieber (16) im Innern einer festen mit dem Betätigungsstück (15) verbundenen Führung trägt, wobei der Schieber derart ausgebildet ist, daß er je nach seiner Position in der Führung Aussparungen schließt oder öffnet, derart, daß je nach Fall die Bewegung des Stanzträgers mit oder ohne die Bewegung komplementärer Lochstanzer (23-24) gesteuert wird, die derart ausgebildet sind, daß sie das Seitenrohr (6) durchstoßen oder zerschneiden, gleichzeitig mit dem Durchstoßen des rohrförmigen Zentralkörpers (2).

**Claims**

1. Punching apparatus for a metal profil (1) having a central tubular body (2), provided with two parallel fabrics, at least partly formed from plastics material strips (4), which are crimped or otherwise assembled with the profile (1) and sides, whereof at least one externally defines with a wall of the central body, parallel to said side, a lateral tube (6) adjacent to the central body (2), said apparatus having a die (11), which can engage in the axis of the central tubular body, a fixed frame (10) supporting the die (11), the latter being surrounded by two elongated, positioning parts (12,13), which are parallel to one another and integral with the frame, on one of which can engage the lateral tiube (6) of the profile (1), respectively to the right or left as a function of the profile position, and a punch holder (18), which moves relative to the die (11), at least one punch (19), supported by the punch holder (18) sliding in a guide bore (20) provided in the die (11), in order to perforate or notch the central body (2) and, if appropriate, the lateral tube (6), characterized in that the die (11) and the punch holder (18) are mounted so as to float with respect to the frame (10) and in that the die (11) has for this purpose a transverse groove (26), in which slides in relative manner a tongue (27) having the same profile, said tongue being integral with a spindle (28) perpendicular to the die (11) and engages in freely rotating manner in a guide bore of the same diameter provided in the frame (10).

2. Punching apparatus according to claim 1, characterized in that the punch holder (18) is constituted by a plate, controlled in displacement relative to the die for an actuating member (15) and supporting towards said die at least one punch (19) and optionally a hollow punch (21) sliding in the die in guides (20 to 22) having the same profile.

3. Punching apparatus according to claims 1 or 2, characterized in that the punch holder (18) in its upper part, which is constituted by an actuating member (15), supports a slide valve (16) sliding within a fixed guide integral with the actuating member (15), said valve being able to close or open, as a function of its position in the guide, cavities such that, as a function of the particular case, the movement of the punch holder is controlled with or without that of complimentary hollow punches (23, 24) able to perforate or cut the lateral tube (6), simultaneously with the perforation of the central tubular body (2).

FIG. 1

# FIG. 2

FIG. 3

FIG. 4

FIG. 5